# EUROPEAN PATENT SPECIFICATION

(11) **EP 2 226 658 B1**
(45) Date of publication and mention of the grant of the patent: **23.08.2017**
(21) Application number: 08866466.9
(22) Date of filing: 16.12.2008
(51) Int. Cl.: G02B 5/30, C08K 5/3492, G02F 1/1335, G02B 1/04

(54) **OPTICAL FILM AND OPTICAL SHEET**
OPTISCHER FILM UND OPTISCHE FOLIE
FILM OPTIQUE ET FEUILLE OPTIQUE

(30) Priority: 27.12.2007 JP 2007338161; 15.12.2008 JP 2008318772
(43) Date of publication of application: 08.09.2010
(73) Proprietor: Adeka Corporation, Tokyo 116-8554 (JP)
(72) Inventor: YOKOTA, Akiko, Saitama-shi Saitama 336-0022 (JP); KAMIMOTO, Tetsuo, Saitama-shi Saitama 336-0022 (JP); FUKUSHIMA, Mitsuru, Saitama-shi Saitama 336-0022 (JP)
(74) Representative: Forstmeyer, Dietmar
(86) International application number: PCT/JP2008/072850
(87) International publication number: WO 2009/084426

(56) References cited:
- EP-A1- 1 746 445
- WO-A1-2005/109052
- WO-A1-2007/111387
- US-A1- 2001 003 363

## Description

### TECHNICAL FIELD

This invention relates to optical films or sheets made of a resin containing a specific triazine compound which secure extended duration of polarizing ability of a polarizing plate and, more particularly, optical films or sheets useful as those used in liquid crystal displays, such as a protective film or sheet of a polarizing plate, a retardation film, a viewing angle compensation film, an antiglare film, a luminance improving film, a diffuser film or sheet, a lens film or sheet, an antifog film, an antistatic film, and a light guide panel; various substrates; various functional films used in plasma displays, such as an antireflection film; and various functional films used in organic EL devices.

### BACKGROUND ART

The term "optical film or sheet" as used herein refers to a film or sheet having an optical function, such as wavelength-selective or nonselective light absorption, luminescence (e.g., fluorescence or phosphorescence), switching between transmission and blocking of light (with, for example, voltage-on and voltage-off), polarization, or antiglare.

A liquid crystal display includes a laminate of various optical films or sheets, such as a diffuser film or sheet and a protective film or sheet of a polarizing plate. Thus, optical films and sheets are expected to perform important functions in the product development featuring predominance over other flat panel displays, such as plasma displays and organic EL displays.

A polarizing plate indispensable for liquid crystal displays includes a polarizing film (also referred to as a polarizer) and, when necessary, a protective film or sheet, e.g., of triacetyl cellulose bonded to both sides of the polarizing film. The polarizing film is made by stretching and thereby orienting a polymer (e.g., polyvinyl alcohol) dyed with iodine or a dichroic dye. A polarizing plate undergoes reduction in polarizing ability during long term use, resulting in a reduction in display contrast. In particular, a polarizing plate using iodine is, while less expensive, less stable than that using a dichroic dye. In addition, polyvinyl alcohol has a disadvantage of yellowing when exposed to ultraviolet light.

Incorporating an ultraviolet absorber in a protective film or sheet of a polarizing plate has been studied as a means for preventing photodeterioration of the polarizing plate or the protective film or sheet. Patent document 1 (see below) proposes using a combination of a triazine UV absorber and a benzotriazole UV absorber. Patent document 2 (see below) proposes using a specific benzotriazole UV absorber. Both the UV absorber systems proposed provide good adhesion between a polarizing film and a protective film of the polarizing plate and endow the film-forming polymer with improved light resistance but are found unsatisfactory in retention of polarizing ability of the polarizer. Relevant prior art can be found in document WO2007/111387 and document EP1746445, the later disclosing an optical film or sheet for use in a polarizing plate comprising a resin (for example a norbornen resin) containing specific triazine compounds.

Patent document 1: JP 2007-004199A
Patent document 2: JP 2007-108775A

### DISCLOSURE OF THE INVENTION

### Problem to be Solved by the Invention

An object of the invention is to provide an optical film or sheet which provides a polarizing plate containing iodine as a dye and having long-lasting polarizing ability.

### Means for Solving the Problem

As a result of intensive investigations, the present inventors have found that a triazine compound having a specific structure exhibits excellent performance in maintaining the polarizing ability of a polarizing plate. The present invention has been completed based on this finding.

The above object of the invention is accomplished by the subject-matter of claim 1. Dependent claims refer to specific embodiments.

### BEST MODE FOR CARRYING OUT THE INVENTION

The optical film and optical sheet according to the invention will be described concretely with reference to their preferred embodiments.

The polarizing film (polarizer) that can be used in a polarizing plate may be any polarizer made by orienting a base polymer, such as polyvinyl alcohol, dyed with iodine by, for example, stretching. It is considered that iodine takes on the form of polyiodide ion to exhibit polarizing ability for a broad wavelength range. For example, polarizing plates containing polyiodide ions having different numbers of iodine atoms are obtained by impregnating a base polymer with aqueous solutions having different iodine to potassium iodide ratios. The aqueous solutions have an iodine concentration usually of from 0.01 to 0.5 mass%, preferably of from 0.02 to 0.4 mass%, and a potassium iodide concentration usually of from 0.01 to 10 mass%, preferably of from 0.02 to 8 mass%. A polarizing plate may be subjected to boric acid treatment, iodide ion treatment, and the like.

The triazine compound used in the invention is represented by general formula (1): 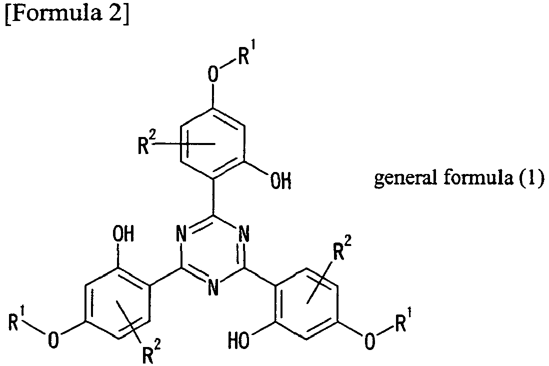 wherein R¹ represents a straight-chain or branched alkyl group having 1 to 12 carbon atoms, a cycloalkyl group having 3 to 8 carbon atoms, an alkenyl group having 3 to 8 carbon atoms, an aryl group having 6 to 18 carbon atoms, an alkylaryl group having 7 to 18 carbon atoms, or an arylalkyl group having 7 to 18 carbon atoms, the alkyl, cycloalkyl, alkenyl, aryl, alkylaryl, or arylalkyl being optionally substituted with a hydroxyl group, a halogen atom, an alkyl group having 1 to 12 carbon atoms, or an alkoxy group and optionally interrupted by an oxygen atom, a sulfur atom, a carbonyl group, an ester group, an amide group, or an imino group, the substitution and the interruption being optionally combined with each other; and R² represents an alkyl group having 1 to 8 carbon atoms or an alkenyl group having 3 to 8 carbon atoms.

In general formula (1), examples of the straight chain or branched alkyl group having 1 to 12 carbon atoms as represented by R¹ include methyl, ethyl, propyl, isopropyl, butyl, isobutyl, sec-butyl, tert-butyl, amyl, tert-amyl, hexyl, octyl, sec-octyl, tert-octyl, 2-ethylhexyl, decyl, undecyl, and dodecyl. Examples of the cycloalkyl group having 3 to 8 carbon atoms include cyclopropyl, cyclopentyl, cyclohexyl, and cycloheptyl. Preferred of them is hexyl in terms of polarizing ability retention.

Examples of the alkyl group having 1 to 8 carbon atoms as represented by R² include methyl, ethyl, propyl, isopropyl, butyl, sec-butyl, tert-butyl, isobutyl, amyl, tert-amyl, octyl, and tert-octyl. Preferred of them is methyl in terms of polarizing ability retention.

Examples of the alkenyl group having 3 to 8 carbon atoms as represented by R¹ or R² include propenyl, butenyl, pentenyl, hexenyl, heptenyl, and octenyl, either straight-chain or branched and having the unsaturated bond at any position.

Examples of the aryl group having 6 to 18 carbon atoms as represented by R¹ include phenyl, naphthyl, and biphenyl. Examples of the alkylaryl group having 7 to 18 carbon atoms include methylphenyl, dimethylphenyl, ethylphenyl, and octylphenyl. Examples of the arylalkyl group having 7 to 18 carbon atoms include benzyl, 2-phenylethyl, and 1-methyl-1-phenylethyl. Examples of the substituted and/or interrupted aryl group include 4-methylphenyl, 3-chlorophenyl, 4-benzyloxyphenyl, 4-cyanophenyl, 4-phenoxyphenyl, 4-glycidyloxyphenyl, and 4-isocyanuratephenyl.

Examples of the substituted and/or interrupted alkyl or cycloalkyl group as presented by R¹ include 2-hydroxypropyl, 2-methoxyethyl, 3-sulfonyl-2-hydroxypropyl, and 4-methylcyclohexyl.

The triazine compound of general formula (1) used in the optical film or sheet of the invention include compound Nos. 1 through 4 shown below.

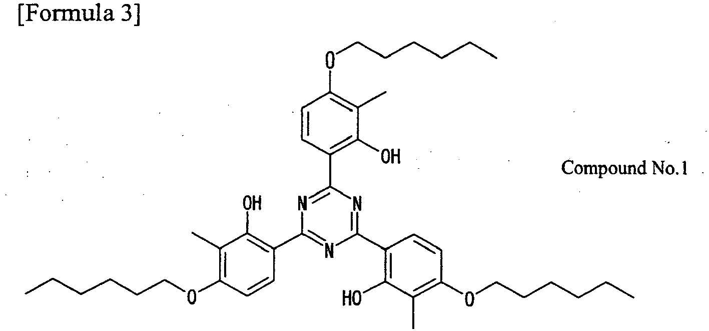

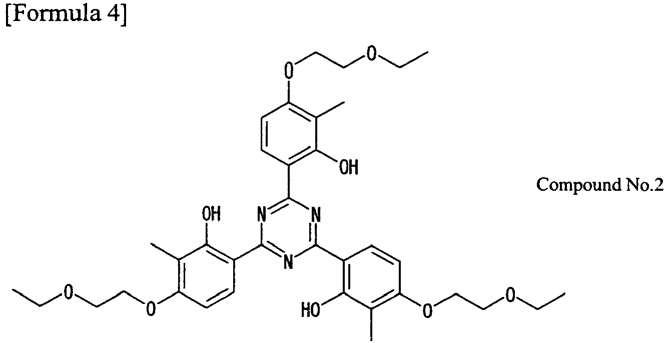

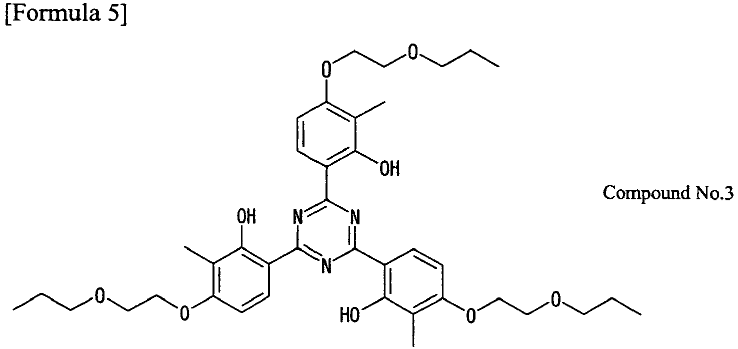

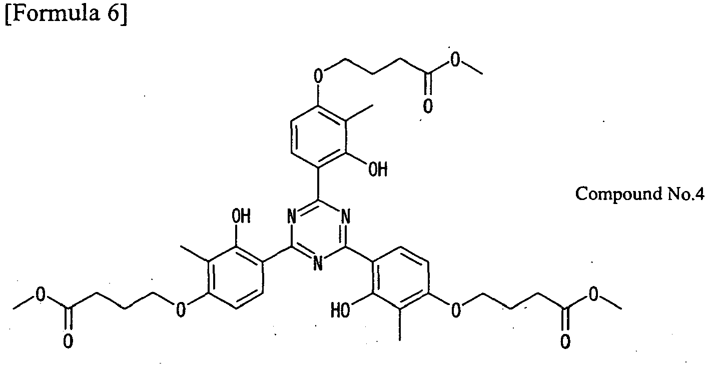

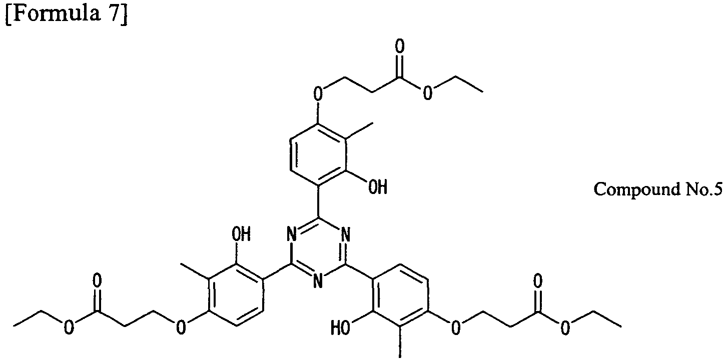

The triazine compound of the invention is preferably used in an amount of 0.001 to 10 parts, more preferably 0.05 to 5 parts, by mass per 100 parts by mass of the resin. Less than 0.001 parts by mass of the triazine compound may fail to secure sufficient retention of polarizing ability. Addition of more than 10 parts by mass of the triazine compound can cause problems, such as impairment of polarization due to reduction of physical properties of the resin or bleeding.

Any synthetic resin having high transmission for visible light is usable as the resin. Preferred are a polycarbonate resin, a polyethylene terephthalate resin, a polyethylene naphthalate resin, a cellulose ester resin, e.g., cellulose triacetate or cellulose acetate butyrate, an acrylic ester resin, e.g., polymethyl acrylate or polymethyl methacrylate, a cycloolefm resin, a polystyrene resin, and a norbornene resin in terms of superiority in transparency, durability, polarization characteristics, and electrical insulating properties.

The optical film or sheet of the invention may be produced by any conventional method, such as casting or melt extrusion. The thickness of the optical film is preferably, but not limited to, 5 to 300 µm, more preferably 5 to 150 µm. The thickness of the optical sheet is preferably, but not limited to, 200 µm to 10 mm, more preferably 300 µm to 5 mm.

The triazine compound used in the invention is excellent in resistance to volatilization so that it is suited to film formation at high temperatures, e.g., of 200 to 350°C. Such high temperatures favor productivity in casting and melt extrusion.

The optical film or sheet containing the triazine compound of the invention may be bonded to a polarizing plate either directly or with an adhesive or via any other functional film. The triazine compound of the invention may be incorporated into a film having a function to make a polyfunctional film.

The optical film or sheet may have its side that is not bonded to a polarizing plate coated with a hardcoat layer or treated for antireflection, antisticking, diffusion, or antiglare.

Liquid crystal displays having the optical film or sheet of the invention enjoy long-lasting polarization. The modes or types of the liquid crystal displays to which the optical film or sheet is applied are not limited. That is, the optical film or sheet is suited to any liquid crystal display irrespective of the driving mode (e.g., TN, STN, or TFT), the backlight source (e.g., fluorescent lamp or LED), whether or not external light (e.g., sunlight) is used (e.g., whether reflective or transmissive), and whether any additional function (e.g., touch panel function) or means for functional improvement for a display device is added to whatever extent.

The triazine compound for use in the invention has high solubility in an acrylic ester resin, a polycarbonate resin, a polyethylene terephthalate resin, a polyethylene naphthalate resin, a polystyrene resin, a cellulose ester resin, a norbornene resin, and the like. Therefore, it is not only effective in preventing iodine from losing its polarizing ability due to light but also expected to have other effects, such as good adhesion with a polarizing plate, stable film physical properties, and properties of not contaminating other members.

The optical film or sheet of the invention preferably contains commonly used additives, such as an antioxidant (phenol, phosphorus, or thioether type), a plasticizer, and a processing aid, according to the type of the resin used.

Examples of the phenol antioxidant include 2,6-di-tert-butyl-p-cresol, 2,6-diphenyl-4-octadecyloxyphenol, distearyl (3,5-di-tert-butyl-4-hydroxybenzyl)phosphonate, 1,6-hexamethylenebis[(3,5-di-tert-butyl-4-hydroxyphenyl)propionamide], 4,4'-thiobis(6-tert-butyl-m-cresol), 2,2'-methylidenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl)propionate, thiodiethylene glycol bis[(3,5-di-tert-butyl-4-hydroxyphenyl) propionate], 1,6-hexamethylenebis[(3,5-di-tert-butyl-4-hydroxyphenyl) propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl] terephthalate, 1,3,5-tris[(3,5-di-tert-butyl-4-hydroxyphenyl)propionyloxyethyl] isocyanurate, 3,9-bis[1,1-dimethyl-2-{(3-tert-butyl-4-hydroxy-5-methylphenyl)prionyloxy}ethyl]-2,4, 8,10-tetraoxaspiro[5.5]undecane, and triethylene glycol bis[(3-tert-butyl-4-hydroxy-5-methylphenyl) propionate. The phenol antioxidant is used in an amount preferably of 0.001 to 10 parts, more preferably 0.05 to 5 parts, by mass per 100 parts by mass of the resin.

Examples of the phosphorus antioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl) pentaerythritol diphosphite, di(nonylphenyl) pentaerythritol diphosphite, bis(2,4-di-tert-butylphenyl) pentaerythritol diphosphite, bis(2,6-di-t-butyl-4-methylphenyl) pentaerythritol diphosphite, bis(2,4,6-tri-tert-butylphenyl) pentaerythritol diphosphite, bis(2,4-dicumylphenyl) pentaerythritol diphosphite, tetra(tridecyl)isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene -10-oxide, 2,2-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl) fluorophosphite, tris(2-[(2,4,8,10-tetrakis-tert-butyldibenzo[d,f][1,3,2]dioxaphosphepin-6-yl)oxy]ethyl)a mine, and 2-ethyl-2-butyl propylene glycol 2,4,6-tri-tert-butylphenol phosphite.

Examples of the thioether antioxidant include dialkyl thiodipropionates, such as dilauryl thiodipropionate, dimyristyl thiodipropionate, and distearyl thiodipropionate, and β-alkylmercaptopropionic acid polyol esters, such as pentaerythritol tetra(β-dodecylmercaptopropionate).

Liquid crystal displays have many elements that should be provided with photostability, such as the resins used in a protective film or sheet for a polarizing plate, a diffuser film or sheet, and a luminance improving film, the liquid crystal compound, and the like. Therefore, while the triazine UV absorber used the invention is particularly effective in stabilizing iodine used as a dye of a polarizing plate, it is preferably used in combination with other UV absorbers including benzotriazole UV absorbers, other triazine UV absorbers, and benzophenone UV absorbers.

Examples of the benzotriazole UV absorbers include 2-(2'-hydroxyphenyl)benzotriazoles, such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2-(2'-hydroxy-3'-tert-butyl-5'-carboxyphenyl)benzotriazole, and 2,2'-methylenebis(4-tert-octyl-6-benzotriazolyl)phenol.

Examples of the triazine UV absorbers include triaryltriazines, such as 2-(2-hydroxy-4-octoxyphenyl)-4,6-bis(2,4-dimethylphenyl)-s-triazine, 2-(2-hydroxy-4-hexyloxyphenyl)-4,6-diphenyl-s-triazine, 2-(2-hydroxy-4-propoxy-5-methylphenyl)-4,6-bis(2,4-dimethylphenyl)-s-triazine, 2-(2-hydroxy-4-hexyloxyphenyl)-4,6-dibiphenyl-s-triazine, 2,4-bis(2-hydroxy-4-octoxyphenyl)-6-(2,4-dimethylphenyl)-s-triazine, and 2,4,6-tris(2-hydroxy-4-octoxyphenyl)-s-triazine.

Examples of the benzophenone UV absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone).

Since these other UV absorbers are incorporated in a resin to be formed into film form that easily allows the components to volatilize, they preferably have a structure providing both high solubility in the base resin and low volatility with heat applied in processing or on use. From this point of view, the molecular weight of the other UV absorbers is preferably 500 or more, more preferably 700 or more. The other UV absorbers may have a polymerizable group or a reactive group introduced therein to gain in molecular weight or to be incorporated into a resin molecule. The amount of the other UV absorbers to be used is preferably 0.01 to 10 parts, more preferably 0.05 to 5 parts, by mass per 100 parts by mass of the resin.

Useful plasticizers include, but are not limited to, phosphoric ester plasticizers and polyester plasticizers. These plasticizers may be used either alone or in combination of two or more thereof.

Examples of the phosphoric ester plasticizers include triphenyl phosphate, tricresyl phosphate, cresyldiphenyl phosphate, octyldiphenyl phosphate, diphenylbiphenyl phosphate, trioctyl phosphate, and tributyl phosphate.

Examples of the polyester plasticizers are acyclic polyesters composed of an aliphatic or aromatic dibasic acid and a diol compound and acyclic polyesters of hydroxycarboxylic acids.

Examples of the aliphatic dibasic acid include oxalic acid, malonic acid, succinic acid, glutaric acid, adipic acid, pimelic acid, azelaic acid, sebacic acid, fumaric acid, 2,2-dimethylglutaric acid, suberic acid, 1,3-cyclopentanedicarboxylic acid, 1,4-cyclohexanedicarboxylic acid, 1,3-cyclohexanedicarboxylic acid, diglycolic acid, itaconic acid, maleic acid, and 2,5-norbornenedicarboxylic acid. Examples of the aromatic dibasic acid include phthalic acid, 1,5-naphthalenedicarboxylic acid, 2,6-naphthalenedicarboxylic acid, biphenyldicarboxylic acid, anthracenedicarboxylic acid, and terphenyldicarboxylic acid.

Examples of the diol compound include ethylene glycol, propylene glycol, 1,3-propanediol, 1,2-butanediol, 1,3-butanediol, 1,4-butanediol, 2-methylpropanediol, 1,3-dimethylpropanediol, 1,5-pentanediol, 2,2-dimethyl-1,3-propanediol, 1,6-hexanediol, 3-methyl-1,5-pentanediol, 1,9-nonanediol, 2,2,4-trimethyl-1,6-hexanediol, 2-ethyl-2-butylpropanediol, diethylene glycol, triethylene glycol, tetraethylene glycol, dipropylene glycol, tripropylene glycol, tetrapropylene glycol, thiodiethylene glycol, 1,3-cyclohexanedimethanol, 1,4-cyclohexanedimethanol, 2,2,4,4-tetramethyl-1,3-cyclobutanediol, and 3,9-bis(2-hydroxy-1,1-dimethylethyl)-2,4,8,10-tetraoxaspiro[5,5]undecane.

Examples of the hydroxycarboxylic acid are 4-hydroxymethylcyclohexanecarboxylic acid, hydroxytrimethylacetic acid, 6-hydroxycapronic acid, glycolic acid, and lactic acid.

Other polyester plasticizers include those formed between tri- or higher functional polyols and monocarboxylic acid compounds. Examples of the tri- or higher functional polyols include glycerol, trimethylolpropane, pentaerythritol, sorbitol, and condensates thereof, e.g., dipentaerythritol and tripentaerythritol. Polyether polyols obtained by adding an alkylene oxide (e.g., ethylene oxide) to these polyols are also useful.

Examples of the monocarboxylic acid include aromatic carboxylic acids, such as p-methylbenzoic acid, m-methylbenzoic acid, dimethylbenzoic acid, p-tert-butylbenzoic acid, p-methoxybenzoic acid, p-chlorobenzoic acid, naphthylic acid, and biphenylcarboxylic acid; alicyclic carboxylic acids, such as cyclohexanecarboxylic acid; and aliphatic carboxylic acids, such as acetic acid, propionic acid and 2-ethylhexanoic acid. These monocarboxylic acids may be used either individually or as a mixture thereof.

The amount of the plasticizer to be used preferably ranges from 0 to 20% by mass relative to the resin in terms of film forming properties and processing properties. For use in an element of liquid crystal displays, the amount is more preferably 1% to 15% by mass, even more preferably 2% to 10% by mass relative to the resin in terms of dimensional stability. The polyester plasticizers are particularly preferred from the standpoint of hydrolysis.

Applications of the optical film or sheet of the invention are not limited to the above discussed formulations and liquid crystal displays. The optical film or sheet of the invention is also suited in applications to the known formulations and configurations of the liquid crystal displays and the optical films and sheets used therein as disclosed in JP 2003-84269A, JP 2002-47357A, JP 2007-108775A, and JP 2007-17555A.

### EXAMPLES

The invention will now be illustrated in greater detail with reference to Examples, but it should be understood that the invention is not limited thereto.

### Example 1 and Comparative Examples 1-1 to 1-5 - Making and Evaluation of Protective Film

Three grams of a norbornene resin (ARTON F5023, from JSR Corp.) and 30 mg of the UV absorber shown in Table 1 were dissolved in 7 g of a toluene/cyclohexane (=9/1) mixed solvent. The resin solution was cast to make a film with a thickness of 40 µm, from which a 2 cm square was cut out to prepare a protective film test piece.

The protective film test piece was laminated to a polarizing plate containing iodine as a dye (Varilight LL-81-18 from Sanritz Corp.; thickness: 100 µm). The laminate was weathered in a Sunshine Weather-O-Meter (83°C; no exposure to rain water; light source: carbon arc) for 240 hours. A non-exposed polarizing plate was superposed on the exposed laminate in a manner to give the minimum transmission. The absorbances of the laminate structure at wavelengths of 400nm, 550 nm, and 700 nm were measured. The performance of the test piece as a protective film for an iodine-containing polarizing plate was evaluated in terms of retention of absorbance. When the percent retention of absorbance after light exposure relative to the initial absorbance (before exposure) was 100%, the polarizer is regarded as having normal function. Reduction of the absorbance indicates a loss of polarizing ability, i.e., a loss of the function as a polarizer. The results are shown in Table 1.

Separately, the same polarizing plates were previously arranged in a crossed configuration, and the protective film test piece was laminated thereto. The total transmission (%) of the laminate structure was measured. The laminate structure was exposed to light in a Sunshine Weather-O-meter for 240 hours, and the absorbance of the exposed laminate structure was measured at a wavelength of 650 nm. The results are also shown in Table 1.

**Table 1**

| | | Example 1 | Comparative Example 1 | | | | |
|---|---|---|---|---|---|---|---|
| | | | -1 | -2 | -3 | -4 | -5 |
| UV Absorber | | Compound No. 1^{*5} | Compound No.6^{*6} | Compound No. 7^{*7} | Compound No. 8^{*8} | Compound No. 9^{*9} | none |
| 400 nm^{*1} | Absorbance after Exposure | 0.469 | 0.493 | 0.485 | 0.475 | 0.482 | 0.519 |
| | Absorbance Retention (%) | 91.7 | 96.5 | 95.0 | 93.0 | 94.4 | 101.5 |
| 550 nm^{*2} | Absorbance after Exposure | 0.504 | 0.451 | 0.446 | 0.449 | 0.446 | 0.406 |
| | Absorbance Retention (%) | 96.8 | 86.7 | 85.7 | 86.3 | 85.7 | 78.0 |
| 700 nm^{*3} | Absorbance after Exposure | 0.289 | 0.283 | 0.264 | 0.289 | 0.268 | 0.459 |
| | Absorbance Retention (%) | 63.1 | 61.8 | 57.5 | 63.0 | 58.4 | 41.8 |
| Crossed Configuration^{*4} | Total Light Transmission (%) | 4.9 | 6.5 | 7.1 | 7.7 | 7.1 | 12.0 |
| | Absorbance after Exposure | 1.408 | 0.899 | 0.800 | 0.953 | 0.927 | 0.590 |
| | Absorbance Retention (%) | 65.9 | 42.1 | 41.2 | 44.6 | 43.4 | 27.6 |

| | | | | | | | |
|---|---|---|---|---|---|---|---|
| *1: The initial absorbance (before exposure) at 400 nm was 0.512. *2: The initial absorbance (before exposure) at 550 nm was 0.521. *3: The initial absorbance (before exposure) at 700 nm was 0.459. *4: The initial absorbance (before exposure) at 650 nm was 2.137. | | | | | | | |

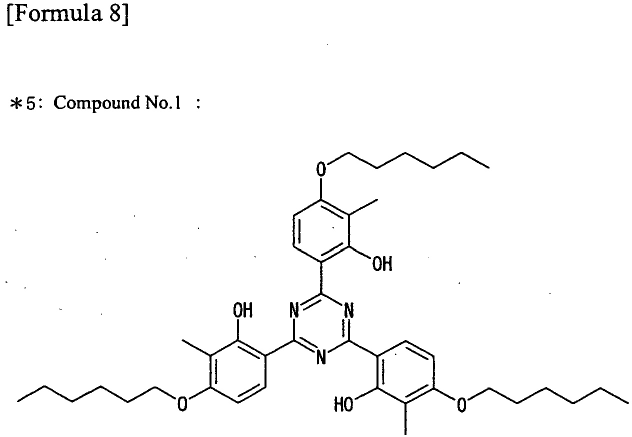

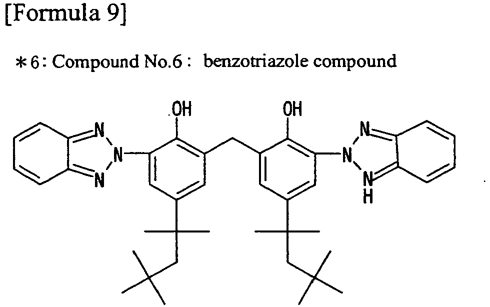

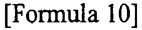

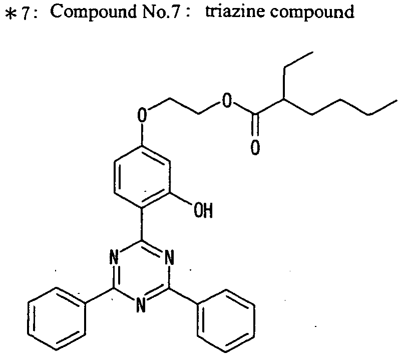

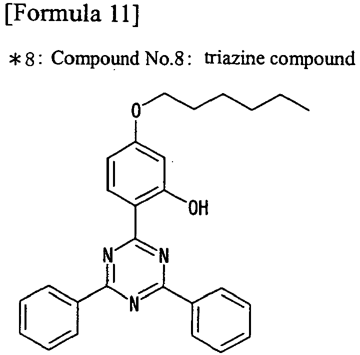

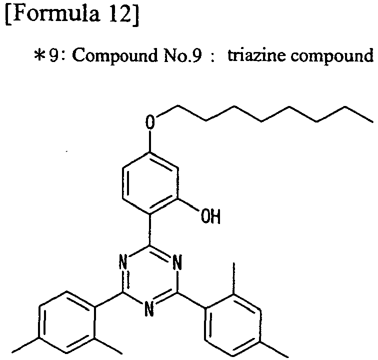

### Examples 2-1 to 2-7 and Comparative Examples 2-1 to 2-4 - Making Film Test Piece and Evaluation for Light Resistance

A film test piece was prepared in the same manner as for the protective film of Example 1, except for using a triacetyl cellulose resin (LT-35 from Daicel Chemical Industries, Ltd.) and the UV absorber shown in Table 2 or 3 in the amount shown per 100 parts by mass of the resin.

The film test piece was exposed to light in a Sunshine Weather-O-Meter (at 83°C; no exposure to rain water; light source: carbon arc) for 360 hours and 480 hours. The total light transmission (%) was measured to obtain a percent retention (%) after the exposure to evaluate light resistance. The results obtained are shown in Tables 2 and 3. In Table 2 and other tables.

**Table 2**

| | | | Example 2 | | | | | | |
|---|---|---|---|---|---|---|---|---|---|
| | | | -1 | -2 | -3 | -4 | -5 | -6 | -7 |
| UV Absorber (mass) | Compound No. 2 | | 0.2 | | | 0.1 | 0.1 | | |
| | Compound No. 3 | | | 0.2 | | | | | 0.1 |
| | Compound No. 4 | | | | 0.2 | | | 0.1 | |
| | Compound No. 6 | | | | | 0.1 | | 0.1 | |
| | Compound No. 7 | | | | | | 0.1 | | |
| Light Resistance Test | Total Light Transmission (0 hr) (%) | | 37.2 | 37.3 | 38.3 | 38.3 | 38.0 | 38.0 | 37.3 |
| | Retention(%) | 360 hr | 87.6 | 86.6 | 85.7 | 82.2 | 80.5 | 79.7 | 76.7 |
| | | 480 hr | 83.3 | 82.8 | 81.4 | 77.8 | 73.4 | 73.2 | 68.8 |

**Table 3**

| | | | Comparative Example 2 | | | |
|---|---|---|---|---|---|---|
| | | | -1 | -2 | -3 | -4 |
| UV Absorber (mass) | Compound No. 6 | | 0.2 | | | |
| | Compound No. 7 | | | 0.2 | | |
| | Compound No. 10^{*1} | | | | 0.2 | |
| Light Resistance Test | Total Light Transmission (0 hr) (%) | | 38.0 | 37.8 | 37.4 | 37.2 |
| | Retention (%) | 360 hr | 76.6 | 77.0 | 76.5 | 68.0 |
| | | 480 hr | 65.5 | 65.9 | 66.1 | 59.8 |

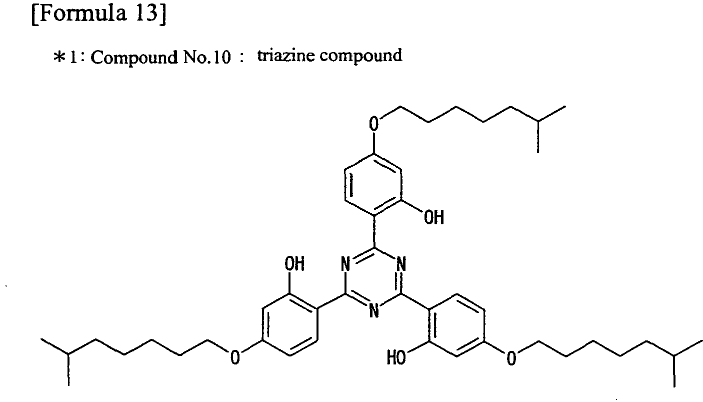

### Examples 3-1 to 3-6 - Making Film Test Piece and Evaluation for Light Resistance

A film test piece was prepared in the same manner as in Example 1, except for using the resin shown in Tables 4 or 5 and 0.2 parts by mass, per 100 parts by mass of the resin, of the UV absorber shown in the same Tables.

The film test piece was exposed to light in a Sunshine Weather-O-Meter (at 83°C; no exposure to rain water; light source: carbon arc) for 240 hours, 360 hours, and 480 hours. The total light transmission (%) was measured to obtain a percent retention (%) after the exposure to evaluate light resistance. The results obtained are shown in Tables 4 and 5. The abbreviations in Tables 4 and 5 have the following meanings.
TAC: triacetyl cellulose resin, LT-35 from Daicel Chemical Industries, Ltd.
PC: polycarbonate resin, E-2000 from Mitsubishi Engineering-Plastics Corp.
PMMA: methacrylic resin, Acrypet VH000 from Mitsubishi Rayon Co., Ltd.
NBE: norbornene resin, ARTON F5023 from JSR Corp.
PET: polyethylene terephthalate resin, TR-8550 from Teijin Chemicals, Ltd.
PS: polystyrene resin, product available from Scientific Polymer Products Inc.; weight average molecular weight: ca. 200,000)

### Comparative Examples 3-1 to 3-6

A film test piece was made in the same manner as for the preparation of the protective film in Example 1, except that the resin shown in Table 6 was used without compounding a UV absorber into the resin. The resulting test piece was evaluated in the same manner as described above in terms of percent retention of total light transmission after 240, 360, and 480 hour exposure. The results obtained are shown in Table 6.

**Table 4**

| | | | Example 3 | | | | | | | |
|---|---|---|---|---|---|---|---|---|---|---|
| | | | -1-1 | -1-2 | -2-1 | -2-2 | -2-3 | -3-1 | -3-2 | -3-3 |
| Resin | | | TAC | | PC | | | PMMA | | |
| UV Absorber (Compound No.) | | | No.3 | No.4 | No.1 | No.3 | No.4 | No.1 | No.3 | No.4 |
| Light Resistance Test | Total Light Transmission (0 hr) (%) | | 37.3 | 37.1 | 37.2 | 37.1 | 37.3 | 40.7 | 40.5 | 39.8 |
| | Retention (%) | 240 hr | 97.3 | 94.5 | 94.3 | 91.0 | 92.0 | 88.3 | 89.6 | 89.5 |
| | | 360 hr | 86.5 | 85.6 | 83.3 | 78.9 | 82.3 | 71.7 | 72.4 | 71.5 |
| | | 480 hr | 82.7 | 81.3 | 72.5 | 68.2 | 72.3 | 66.1 | 66.6 | 65.1 |

**Table 5**

| | | | Example 3 | | | | | | | | |
|---|---|---|---|---|---|---|---|---|---|---|---|
| | | | -4-1 | -4-2 | -4-3 | -5-1 | -5-2 | -5-3 | -6-1 | -6-2 | -6-3 |
| Resin | | | NBE | | | PET | | | PS | | |
| UV Absorber (Compound No.) | | | No.1 | No.3 | No.4 | No.1 | No.3 | No.4 | No.1 | No.3 | No.4 |
| Light Resistance Test | Total Light Transmission (0 hr) (%) | | 40.8 | 40.5 | 40.4 | 37.3 | 37.2 | 37.3 | 38.1 | 38.3 | 37.7 |
| | Retention (%) | 240 hr | 77.7 | 81.0 | 82.7 | 94.6 | 93.8 | 96.0 | 97.1 | 95.7 | 101.5 |
| | | 360 hr | 71.0 | 74.1 | 74.5 | 91.5 | 89.2 | 92.6 | 90.1 | 88.9 | 94.8 |
| | | 480 hr | 75.3 | 73.5 | 74.9 | 82.6 | 78.8 | 82.8 | 85.8 | 86.1 | 86.5 |

**Table 6**

| | | | Comparative Example 3 | | | | | |
|---|---|---|---|---|---|---|---|---|
| | | | -1 | -2 | -3 | -4 | -5 | -6 |
| Resin | | | TAC | PC | PMMA | NBE | PET | PS |
| UV Absorber (Compound No.) | | | none | none | none | none | none | none |
| Light Resistance Test | Total Light Transmission (0 hr) (%) | | 37.2 | 37.4 | 40.3 | 40.1 | 37.1 | 38.3 |
| | Retention (%) | 240 hr | 83.7 | 81.3 | 74.4 | 73.3 | 88.7 | 88.6 |
| | | 360 hr | 68.1 | 67.6 | 54.7 | 63.9 | 80.0 | 84.2 |
| | | 480 hr | 59.8 | 56.0 | 48.5 | 59.0 | 68.0 | 75.8 |

The results in Table 1 reveal that, while the changes in absorbance are small at a short wavelength of 400 nm, there is a tendency that the absorbance shows greater reductions at longer wavelengths of 550 nm and 700 nm. Considering that a UV absorber system in a polarizing plate should have a high retention at all the wavelengths tested so that the polarizing plate may have long-lasting polarizing function, the specific triazine compound used in the invention has a retention of more than 90% at a short wavelength, which is slightly lower than the retentions of the benzotriazole compound or the other triazine compounds, and achieves high retentions in the long wavelength range. In particular, the triazine compound of the invention achieves a retention as specially high as 97% at 550 nm, at which wavelength the other compounds have a retention of about 87% at the highest.

The results with the polarizers in a crossed configuration show particularly remarkable effects of the triazine compound of the invention in retaining the absorbance.

The results in Tables 2 and 3 demonstrate that the triazine compounds of the invention are superior to the conventional UV absorbers such that they have equal or superior effects in an amount half that of conventional UV absorbers.

It is seen from the results in Tables 4, 5, and 6 that the triazine compounds of the invention have appreciable effects on various resins, including a cellulose ester resin and a polyethylene terephthalate resin.

The results discussed above prove that the triazine compounds of the invention exhibit a high retention of absorbance at all the wavelengths which is required to maintain the function of a polarizing plate. The effect is particularly remarkable at long wavelengths and on polarizing plates arranged in a crossed configuration. The triazine compounds of the invention have equal or superior effects to conventional compounds in an amount half that of the conventional compounds and exhibit good effects on a variety of resins. Accordingly, the specific triazine compounds of the invention provide an optical film or sheet excellent in performance, such as retention of polarizing ability, for use in a polarizing plate having iodine as a dye.

### INDUSTRIAL APPLICABILITY

The invention provides an optical film or sheet providing a polarizing plate having long-lasting polarizing ability.

## Claims

1. A polarizing plate having iodine as a dye, which polarizing plate includes an optical film or sheet comprising a resin selected from the group consisting of an acrylic ester resin, a polycarbonate resin, a polyethylene terephthalate resin, a polystyrene resin, a cellulose ester resin, and a norbornene resin, said resin containing a triazine compound selected from the group consisting of: 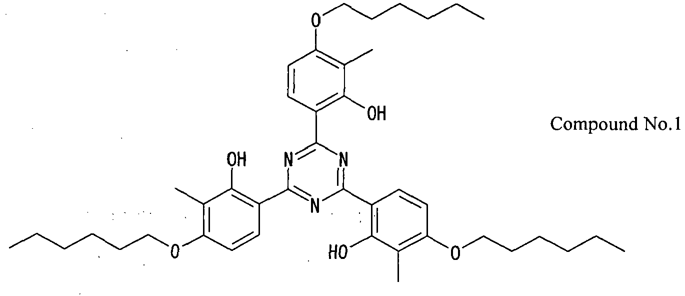 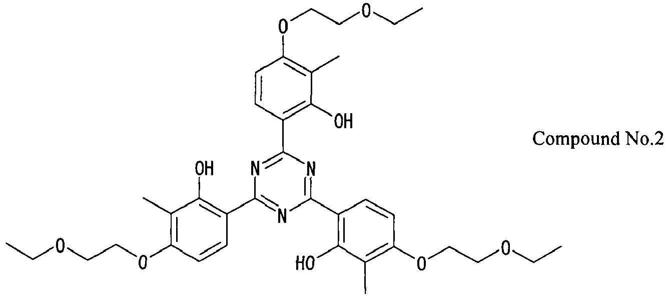 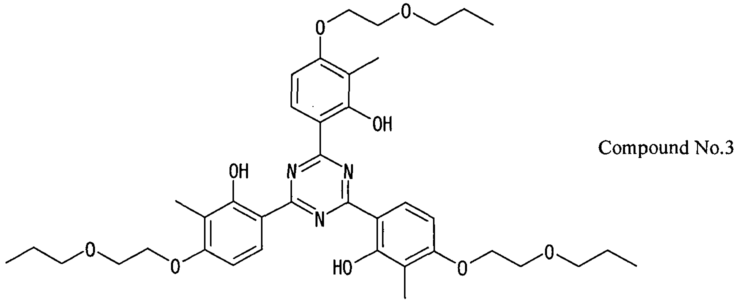 and

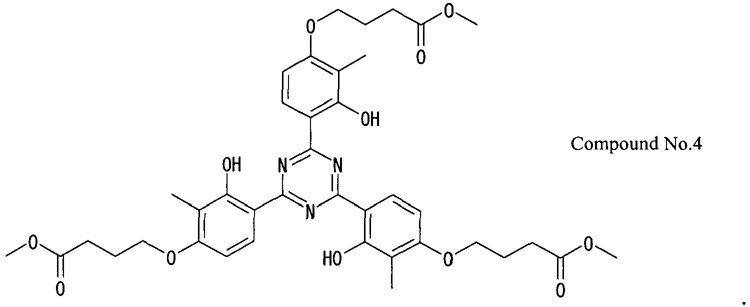

2. The polarizing plate according to claim 1, wherein the optical film or sheet is disposed in the opposite side of the polarizing plate in contact with the liquid crystal cell.

3. The polarizing plate of claim 1 or 2, wherein the optical film or sheet is a protective film or sheet for the polarizing plate.

4. A liquid crystal display containing the polarizing plate according to any one of claims 1 to 3.

5. Use of a polarizing plate according to any one of claims 1 to 3 for maintaining the polarizing ability of the polarizing plate for an extended period of time.

## Patentansprüche

1. Polarisationsplatte, die Iod als einen Farbstoff aufweist, wobei die Polarisationsplatte einen optischen Film oder eine optische Folie enthält, der / die ein Harz umfasst, welches aus der Gruppe ausgewählt ist, die aus einem Acrylsäureester-Harz, einem Polycarbonat- Harz, einem Polyethylenterephthalat-Harz, einem Polystyrol- Harz, einem Celluloseester- Harz und einem Norbornen- Harz besteht, wobei das Harz eine Triazinverbindung enthält, welche aus der Gruppe ausgewählt ist, die aus: 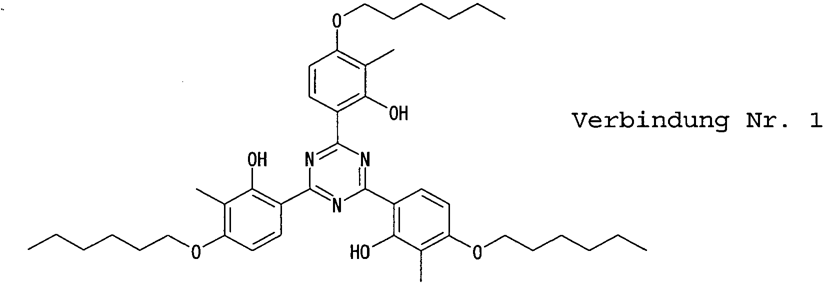 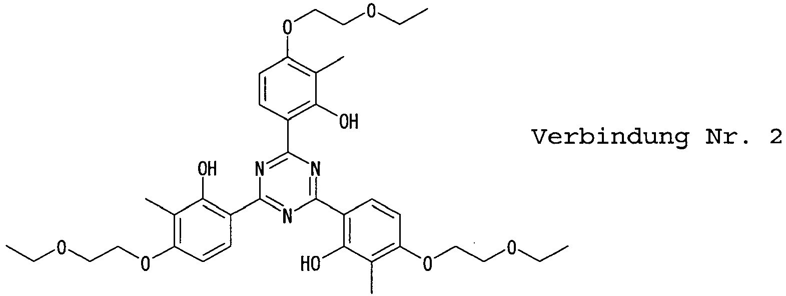 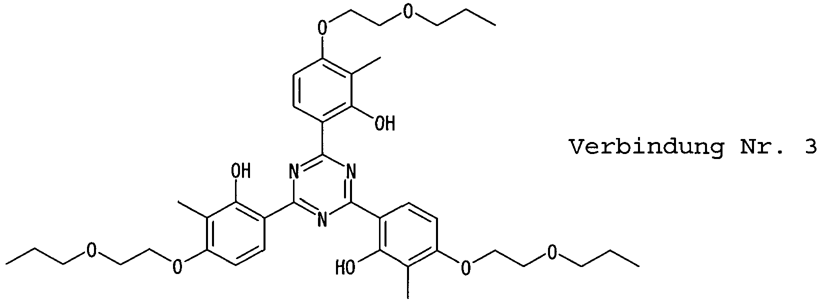 und

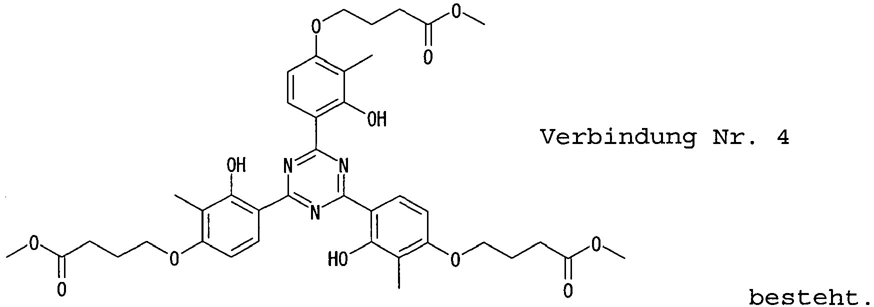

2. Die Polarisationsplatte nach Anspruch 1, wobei der optische Film oder die optische Folie auf der Seite der Polarisationsplatte angeordnet ist, die der Seite in Kontakt mit der Flüssigkristallzelle gegenüberliegt.

3. Die Polarisationsplatte nach Anspruch 1 oder 2, wobei der optische Film oder die optische Folie ein Schutzfilm oder eine Schutzfolie für die Polarisationsplatte ist.

4. Flüssigkristallanzeige, welche die Polarisationsplatte gemäß einem der Ansprüche 1 bis 3 enthält.

5. Verwendung einer Polarisationsplatte gemäß einem der Ansprüche 1 bis 3 zur Aufrechterhaltung der Polarisationsfähigkeit der Polarisationsplatte über einen längeren Zeitraum.

## Revendications

1. Plaque de polarisation comprenant de l'iode en tant que colorant, laquelle plaque de polarisation comprend un film ou une feuille optique comprenant une résine choisie dans le groupe constitué par une résine d'ester acrylique, une résine de polycarbonate, une résine de téréphtalate de polyéthylène, une résine de polystyrène, une résine d'ester de cellulose et une résine de norbornène, ladite résine contenant un composé triazine choisi dans le groupe constitué par :

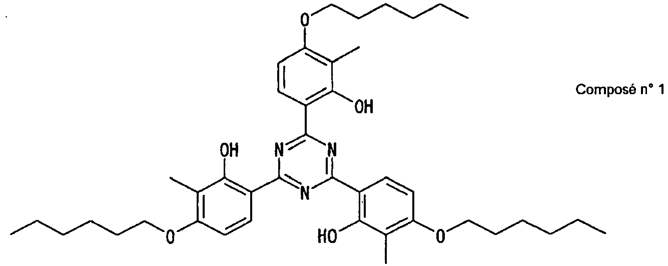

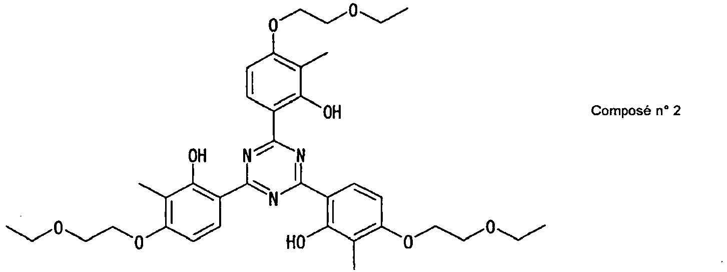

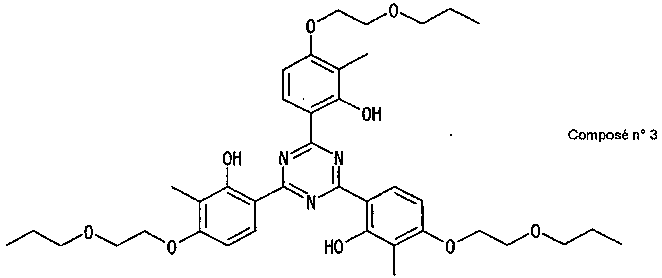

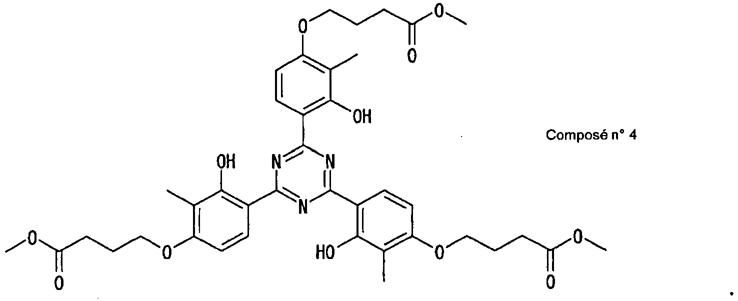

2. Plaque de polarisation selon la revendication 1, dans laquelle le film ou la feuille optique est disposée sur le côté opposé de la plaque de polarisation en contact avec la cellule à cristaux liquides.

3. Plaque de polarisation selon la revendication 1 ou 2, dans laquelle le film ou la feuille optique est un film ou une feuille protectrice pour la plaque de polarisation.

4. Dispositif d'affichage à cristaux liquides contenant la plaque de polarisation selon l'une quelconque des revendications 1 à 3.

5. Utilisation d'une plaque de polarisation selon l'une quelconque des revendications 1 à 3 pour maintenir la capacité de polarisation de la plaque de polarisation pendant une période de temps prolongée.
